# FASCICULE DE BREVET EUROPEEN

(11) **EP 3 807 550 B1**
(45) Date de publication et mention de la délivrance du brevet: **20.08.2025**
(21) Numéro de dépôt: 19736591.9
(22) Date de dépôt: 10.06.2019
(51) Int. Cl.: F16D 65/00, F16D 65/092

(54) **PROCEDE DE SEPARATION DE MOYENS DE FRICTION D'UN ORGANE DE FREINAGE**
VERFAHREN ZUR TRENNUNG VON REIBUNGSMITTELN VON EINEM BREMSELEMENT
METHOD FOR SEPARATING FRICTION MEANS FROM A BRAKING MEMBER

(30) Priorité: 18.06.2018 FR 1855340
(43) Date de publication de la demande: 21.04.2021
(73) Titulaire: Astemo France, 93700 Drancy (FR)
(72) Inventeur: PASQUET, Thierry, 94700 VINCENNES (FR); BOURLON, Philippe, 77230 DAMMARTIN EN GOELE (FR)
(74) Mandataire: LLR
(86) Numéro de dépôt international: PCT/EP2019/065057
(87) Numéro de publication internationale: WO 2019/243094

(56) Documents cités:
- DE-A1- 102008 029 504
- FR-A1- 2 815 099
- GB-A- 2 492 858
- GB-A- 2 533 476
- US-A1- 2014 262 633

## Description

L'invention se rapporte à un système de freinage pour un véhicule. Plus particulièrement, l'invention se rapporte à un organe de freinage et des moyens de friction pour un système de freinage pour un véhicule.

Un système de freinage est par exemple un système de freinage à disque plus communément appelé « frein à disque » ou un système de freinage à tambour plus communément appelé « frein à tambour ». Il comprend en général des moyens de friction reliés à un organe d'actionnement apte à déplacer les moyens de friction en direction d'un organe de freinage fixé à une roue du véhicule. Cela a pour but de mettre les moyens de friction, par exemple des garnitures ou plaquettes de frein, en contact avec l'organe de freinage pour freiner le véhicule par friction ou de les écarter de l'organe de freinage dans le but de cesser le freinage. L'organe d'actionnement est en général couplé à des moyens de transmission destinés à entrainer le déplacement des moyens de friction au moyen de l'énergie fournie par l'organe d'actionnement. Lorsque le système de freinage est un frein à disque, l'organe de freinage est formé par un disque solidaire en rotation de la roue. Dans le cas où le système de freinage est un frein à tambour, l'organe de freinage est formé par un tambour solidaire en rotation de la roue.

Dans certains cas, il s'avère que l'organe d'actionnement n'est pas suffisamment efficace pour séparer les moyens de friction de l'organe de freinage à la fin d'un freinage. Cela peut être causé par un phénomène d'adhérence entre les moyens de friction et l'organe de freinage résultant de la friction entre ces deux éléments. Il s'ensuit que le freinage peut être prolongé de manière non souhaitée.

Le document GB2492858A montre un dispositif de freinage avec des moyens pour séparer les patins de frein du disque de freinage

Les documents US201426 A1 et FR2815099A1 montrent des dispositifs de freinage avec des moyens de récollection de résidus de friction.

L'invention a pour but de remédier à cet inconvénient en améliorant la séparation des moyens de friction de l'organe de freinage.

A cet effet, on prévoit selon l'invention un dispositif de freinage pour un véhicule selon la revendication 1.

Ainsi, les moyens de friction peuvent être séparés de l'organe de freinage en envoyant un flux d'air en direction de l'organe de freinage à l'aide du conduit. La séparation des moyens de friction de l'organe de freinage étant réalisée grâce au conduit, on comprend que ce dispositif est simple à réaliser et à agencer. Au surplus, ce type de séparation s'avère plus efficace que des dispositifs de séparation classiques. De plus, étant donné que c'est de l'air qui est utilisé, le dispositif présente un coût de fonctionnement très faible en ressource, ce qui contribue à le rendre économique et écologique. En outre, grâce aux organes de réception, on maitrise la dispersion des résidus de friction de manière à éviter toute pollution de l'environnement extérieur. Cela permet notamment de réduire les émissions de dioxyde de carbone du véhicule.

Selon l'invention, le conduit est orienté de manière à ce qu'un flux d'air sortant du conduit emporte les résidus captés par l'organe de réception.

Le flux d'air a ainsi une double fonction. Non seulement il permet de séparer les moyens de friction de l'organe de freinage, mais il peut également emporter les résidus de friction afin de nettoyer le dispositif de freinage.

Selon l'invention, le dispositif comprend en outre deux cyclones situés en aval de l'organe de freinage par rapport à une direction d'écoulement de l'air fourni par le conduit.

Il est ainsi possible de filtrer le flux d'air sortant du conduit pour le délester de particules. Cela est notamment avantageux si le flux d'air a emporté les résidus de friction générés lors du freinage.

Avantageusement, le dispositif comprend en outre une turbine et un moteur couplé à la turbine, situés en aval de l'organe de freinage par rapport à une direction d'écoulement de l'air fourni par le conduit.

La turbine et le moteur permettent ainsi d'augmenter la pression du flux d'air afin de le rendre plus efficace dans la séparation des moyens de friction de l'organe de freinage.

Avantageusement, le dispositif comprend en outre un filtre situé en aval de l'organe de freinage par rapport à une direction d'écoulement de l'air fourni par le conduit.

Il est ainsi possible de filtrer le flux d'air sortant du conduit pour le délester de particules telles que des résidus de friction. Si le dispositif comprend un cyclone tel qu'énoncé ci-dessus, le filtre peut avoir pour fonction d'effectuer un filtrage supplémentaire du flux d'air, notamment pour filtrer les particules qui n'auraient pas été captées par les cyclones.

Avantageusement, le dispositif est agencé de sorte qu'au moins une partie de l'air sortant du conduit est réintroduite dans le conduit.

On recycle ainsi l'air utilisé dans le dispositif. De la sorte, l'alimentation du conduit en air est facilitée et le dispositif s'en trouve simplifié.

On prévoit également selon l'invention un procédé de séparation de moyens de friction d'un organe de freinage d'un véhicule selon la revendication 5.

Avantageusement, on projette le flux d'air dans un délai prédéterminé après qu'un freinage du véhicule a eu lieu.

En projetant l'air juste après le freinage, on s'assure que le flux d'air est projeté seulement au moment où il est nécessaire. On d'autres termes, on optimise le temps d'utilisation du dispositif.

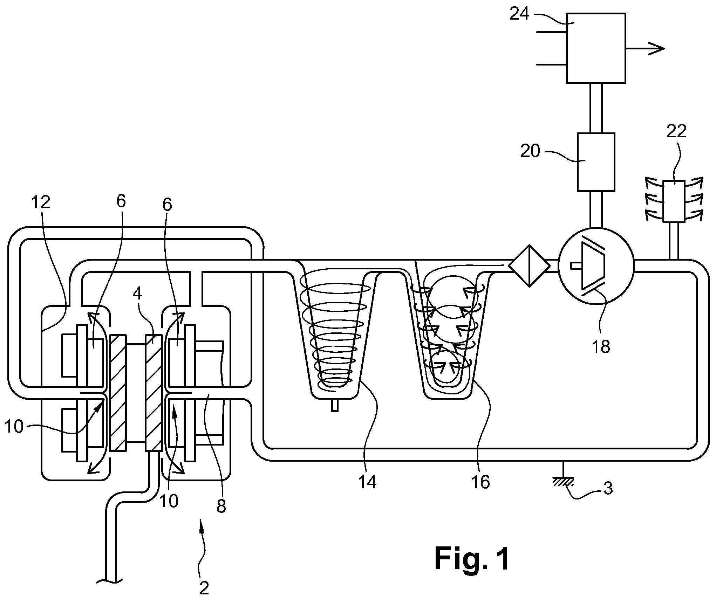

On va maintenant présenter un mode de réalisation de l'invention donné à titre d'exemple non limitatif et à l'appui de la figure unique annexée, la figure 1, qui est un schéma illustrant un dispositif de freinage 2 selon l'invention.

Le dispositif de freinage 2, typiquement un frein à disque hydraulique à étrier flottant, comprend un bâti 3 et un organe de freinage 4 ici formé par un disque solidaire d'une roue d'un véhicule (non représentée) ainsi que des moyens de friction 6. Ces derniers sont ici formés de deux garnitures ou plaquettes de frein reliées au bâti 3 et montées coulissantes par rapport à l'organe de freinage 4. Plus particulièrement, les moyens de friction 6 sont destinés à venir en contact avec des faces planes respectives opposées de l'organe de freinage 4, ce dernier s'étendant entre les moyens de friction 6.

Le freinage du véhicule se fait de manière classique.

Lorsque le véhicule roule, les moyens de friction 6 sont éloignés de l'organe de freinage 4.

Si le conducteur du véhicule utilise un organe d'actionnement de freinage, par exemple une pédale de frein, typiquement un piston hydraulique associé à un dispositif de génération de pression d'un liquide de frein, fait coulisser les moyens de friction 6 en direction de l'organe de freinage 4 jusqu'à ce qu'ils entrent en contact avec celui-ci. Etant donné que l'organe de freinage 4 est solidaire de la roue du véhicule, ce contact génère une friction entre les moyens de friction 6 et l'organe de freinage 4, ce qui permet de transformer l'énergie cinétique de la roue en chaleur. Cela a pour effet de diminuer la vitesse de rotation de la roue et donc de ralentir le véhicule.

Une fois que la vitesse du véhicule a diminué jusqu'à une valeur souhaitée par le conducteur, il cesse d'actionner l'organe d'actionnement de freinage. Le contact entre l'organe de freinage 4 et les moyens de friction 6 cesse, si bien qu'il n'y a plus de friction entre ces deux éléments. Le véhicule n'est alors plus ralenti.

On peut également prévoir que le dispositif de freinage 2 ne soit pas destiné à ralentir le véhicule mais à le maintenir immobile. Le dispositif de freinage 2 serait alors commandé par un organe de blocage, tel qu'un frein à main également connu sous la désignation « frein de parking ».

Le dispositif de freinage 2 comprend un conduit 8 ménagé dans le bâti 3. Le conduit 8 est destiné à projeter un flux d'air en direction de l'organe de freinage 4. A cet effet, le conduit 8 présente deux buses d'éjection 10 entourée des moyens de friction 6 et solidaires de celles-ci, comme cela est visible sur la figure 1. Les buses d'éjection 10 débouchent en regard de l'organe de freinage 4.

La fonction du flux d'air est de séparer les moyens de friction 6 de l'organe de freinage 4, notamment après un freinage tel qu'expliqué plus haut. Lorsque le conducteur du véhicule décider d'arrêter le freinage, il est nécessaire de séparer ces deux éléments de manière à ce qu'ils ne continuent pas de générer un couple de friction qui ralentirait le véhicule davantage que nécessaire et engendrerait une augmentation de la consommation de carburant et de l'usure des éléments de friction. Ainsi, le dispositif de freinage 2 est agencé de sorte que, dans un délai prédéterminé après un freinage, par exemple de l'ordre d'un dixième de seconde, un flux d'air est projeté du conduit 8 en direction de l'organe de freinage 4. Etant donné que le conduit 8 est solidaire des moyens de friction, le flux d'air génère une force qui tend à séparer les moyens de friction 6 de l'organe de freinage 4 afin de laisser passer l'air. De par sa configuration, on comprend que le pilotage du dispositif de freinage peut se faire aussi bien avec un réseau câblé ou bien de manière sans fil ou « wireless ».

Le dispositif de freinage 2 comprend avantageusement des organes de réception 12 agencés pour capter des résidus résultant d'une friction entre les moyens de friction 6 et l'organe de freinage 4. Comme cela est visible sur la figure 1, les organes de réception 12 sont ici au nombre de deux et ont chacun une forme générale de plaque entourant les moyens de friction 6 de manière à capter la plus grande quantité de résidus de friction possible. De plus, cette forme permet au flux d'air d'être guidé par les organes de réception 12 afin qu'il puisse emporter les résidus de friction avant d'entrer de nouveau dans le conduit 8 par d'autres ouvertures. On comprend donc qu'on donne une fonction supplémentaire au flux d'air, la captation des résidus de friction, qui est indépendante de sa fonction première qui est la séparation des moyens de friction 6 de l'organe de freinage 4.

Le dispositif de freinage 2 comprend avantageusement au moins un cyclone situé en aval de l'organe de freinage 4 par rapport à une direction d'écoulement du flux d'air. En l'espèce, les cyclones sont ici en nombre de deux et agencés en série. Un premier cyclone 14 est prévu afin de séparer des gouttes de liquide, notamment des gouttes d'eau, du flux d'air. Un second cyclone 16 est prévu afin de séparer des résidus de friction portés par le flux d'air et présentant une taille suffisamment grande.

Le dispositif de freinage 2 comprend une turbine 18 située en aval des cyclones 14, 16 par rapport à la direction d'écoulement du flux d'air. La turbine 18 est couplée à un moteur 20, par exemple un moteur sans balais plus communément désigné par l'acronyme BLDC motor pour les termes anglo-saxons « BrushLess Direct Current motor », de manière connue en soi afin d'augmenter la pression du flux d'air traversant la turbine 18. Le moteur est commandé par un organe de commande 24. Il est notamment possible de fixer l'augmentation de pression à une valeur choisie et maitrisée.

Le dispositif de freinage 2 comprend un filtre 22 situé en aval de la turbine 18 par rapport à la direction d'écoulement du flux d'air. Le filtre 22 permet de séparer les résidus de friction restants du flux d'air qui n'ont pas été séparés par le second cyclone 16. A la sortie du filtre 22, le flux d'air comporte une quantité minime de résidus de friction.

Comme cela est visible sur la figure 1, le conduit 8 se présente sous la forme d'une boucle pratiquement fermée, puisque le flux d'air ne peut en sortir qu'après les buses d'éjection 10. Et même à ce niveau-là, l'organe de freinage 4 et les organes de réception 12 sont agencées pour diriger le flux d'air afin qu'il entre de nouveau dans le conduit 8. En d'autres termes, le dispositif de freinage 2 est agencé de sorte qu'au moins une partie de l'air sortant du conduit 8 est réintroduite dans le conduit 8. De la sorte, le flux d'air suit la trajectoire suivante : il sort des buses d'éjection 10 et est dévié par l'organe de freinage 4 et les organes de réception 12, une grande partie du flux d'air entre de nouveau dans le conduit 8, passe à travers les deux cyclones 14, 16, la turbine 18 puis le filtre 22 avant d'être réinjecté via les buses d'injection 10.

L'invention n'est pas limitée au mode de réalisation présenté et d'autres modes de réalisation apparaîtront clairement à l'homme du métier. Selon une variante de réalisation de l'invention, on prévoie de séparer les moyens de friction de l'organe de freinage non pas en projetant un flux d'air en direction de l'organe de freinage mais créant une dépression afin d'attirer les moyens de friction pour les éloigner de l'organe de freinage. Dans ce cas-là, le conduit n'est pas solidaire des moyens de friction.

### Nomenclature :

2 : dispositif de freinage
3 : bâti
4 : organe de freinage
6 : moyens de friction
8 : conduit
10 : buse d'éjection
12 : organe de réception
14 : premier cyclone
16 : second cyclone
18 : turbine
20 : moteur
22 : filtre
24 : organe de commande

## Revendications

1. Dispositif de freinage (2) pour un véhicule, comprenant :
- un organe de freinage (4),
- des moyens de friction (6) aptes à venir en contact avec l'organe de freinage (4), et
- un conduit (8) d'alimentation en air, solidaire des moyens de friction (6) et débouchant en regard de l'organe de freinage (4),
**caractérisé en ce qu'**il comprend en outre :
- des organes de réception (12), en forme générale de plaque entourant les moyens de friction (6), agencés pour capter des résidus d'une friction entre les moyens de friction (6) et l'organe de freinage (4), et
- deux cyclones (14, 16) agencés en série et situés en aval de l'organe de freinage (4) par rapport à une direction d'écoulement de l'air fourni par le conduit (8),
le conduit (8) étant orienté de manière à ce qu'un flux d'air sortant du conduit (8) emporte les résidus captés par les organes de réception (12).

2. Dispositif (2) selon la revendication 1, comprenant en outre une turbine (18) et un moteur (20) couplé à la turbine (18), situés en aval de l'organe de freinage (4) par rapport à une direction d'écoulement de l'air fourni par le conduit (8).

3. Dispositif (2) selon l'une quelconque des revendications précédentes, comprenant en outre un filtre (22) situé en aval de l'organe de freinage (4) par rapport à une direction d'écoulement de l'air fourni par le conduit (8).

4. Dispositif (2) selon l'une quelconque des revendications précédentes, agencé de sorte qu'au moins une partie de l'air sortant du conduit (8) est réintroduite dans le conduit (8).

5. Procédé de séparation de moyens de friction (6) d'un organe de freinage (4) d'un véhicule, dans lequel un conduit (8) solidaire des moyens de friction (6) projette un flux d'air en direction de l'organe de freinage (4), **caractérisé en ce que** des organes de réception (12), en forme générale de plaque entourant les moyens de friction (6), sont agencés pour capter des résidus résultant d'une friction entre les moyens de friction (6) et l'organe de freinage (4), et **en ce que** ledit flux d'air passe à travers deux cyclones (14, 16) agencés en série et situés en aval de l'organe de freinage (4) par rapport à une direction d'écoulement de l'air fourni par le conduit (8), le conduit (8) étant orienté de manière à ce qu'un flux d'air sortant du conduit (8) emporte les résidus captés par les organes de réception (12).

6. Procédé selon la revendication précédente, dans lequel on projette le flux d'air dans un délai prédéterminé après qu'un freinage du véhicule a eu lieu.

## Patentansprüche

1. Bremsvorrichtung (2) für ein Fahrzeug, umfassend:
- ein Bremselement (4),
- Reibungsmittel (6), die in der Lage sind, mit dem Bremselement (4) in Kontakt zu kommen, und
- eine Rohrleitung (8) für die Versorgung mit Luft, die mit den Reibungsmitteln (6) fest verbunden ist und gegenüber dem Bremselement (4) mündet,
**dadurch gekennzeichnet, dass** sie ferner Folgendes umfasst:
- Aufnahmeelemente (12), die allgemein plattenförmig sind, die Reibungsmittel (6) umgeben und so angeordnet sind, dass sie Rückstände aus einer Reibung zwischen den Reibungsmitteln (6) und dem Bremselement (4) einfangen, und
- zwei Zyklone (14, 16), die in Reihe angeordnet sind und sich stromabwärts von dem Bremselement (4) bezogen auf eine Strömungsrichtung der von der Rohrleitung (8) bereitgestellten Luft befinden,
wobei die Rohrleitung (8) so ausgerichtet ist, dass ein Luftstrom, der aus der Rohrleitung (8) austritt, die von den Aufnahmeelementen (12) eingefangenen Rückstände hinwegträgt.

2. Vorrichtung (2) nach Anspruch 1, ferner umfassend eine Turbine (18) und einen mit der Turbine (18) gekoppelten Motor (20), die sich stromabwärts von dem Bremselement (4) bezogen auf eine Strömungsrichtung der von der Rohrleitung (8) bereitgestellten Luft befinden.

3. Vorrichtung (2) nach einem der vorhergehenden Ansprüche, ferner umfassend einen Filter (22), der sich stromabwärts von dem Bremselement (4) bezogen auf eine Strömungsrichtung der von der Rohrleitung (8) bereitgestellten Luft befindet.

4. Vorrichtung (2) nach einem der vorhergehenden Ansprüche, die so angeordnet ist, dass wenigstens ein Teil der Luft, die aus der Rohrleitung (8) austritt, in die Rohrleitung (8) zurückgeführt wird.

5. Verfahren zur Trennung von Reibungsmitteln (6) eines Bremselements (4) eines Fahrzeugs, wobei eine Rohrleitung (8), die mit den Reibungsmitteln (6) fest verbunden ist, einen Luftstrom in Richtung des Bremselements (4) auswirft, **dadurch gekennzeichnet, dass** Aufnahmeelemente (12), die allgemein plattenförmig sind und die Reibungsmittel (6) umgeben, so angeordnet sind, dass sie Rückstände aus einer Reibung zwischen den Reibungsmitteln (6) und dem Bremselement (4) einfangen, und dadurch, dass der Luftstrom die zwei Zyklone (14, 16) durchquert, die in Reihe angeordnet sind und sich stromabwärts von dem Bremselement (4) bezogen auf eine Strömungsrichtung der von der Rohrleitung (8) bereitgestellten Luft befinden, wobei die Rohrleitung (8) so ausgerichtet ist, dass ein Luftstrom, der aus der Rohrleitung (8) austritt, die von den Aufnahmeelementen (12) eingefangenen Rückstände hinwegträgt.

6. Verfahren nach dem vorhergehenden Anspruch, wobei der Luftstrom mit einer zuvor festgelegten Verzögerung, nachdem eine Bremsung erfolgt ist, ausgeworfen wird.

## Claims

1. Braking device (2) for a vehicle, comprising:
- a braking member (4),
- friction means (6) that can come into contact with the braking member (4), and
- an air supply line (8) secured to the friction means (6) and opening out opposite the braking member (4),
**characterised in that** it further comprises:
- generally plate-shaped reception members (12) surrounding the friction means (6), arranged to capture residues of friction between the friction means (6) and the braking member (4), and
- two cyclones (14, 16) arranged in series and located downstream from the braking member (4) relative to a flow direction of the air supplied by the line (8),
the line (8) being directed so that an air flow leaving the line (8) carries away the residues captured by the reception members (12).

2. Device (2) according to claim 1, further comprising a turbine (18) and a motor (20) coupled to the turbine (18), located downstream from the braking member (4) relative to a flow direction of the air supplied by the line (8).

3. Device (2) according to any one of the preceding claims, further comprising a filter (22) located downstream from the braking member (4) relative to a flow direction of the air supplied by the line (8).

4. Device (2) according to any one of the preceding claims, arranged so that at least some of the air leaving the line (8) is reintroduced into the line (8).

5. Method for separating friction means (6) from a braking member (4) of a vehicle, wherein a line (8) secured to the friction means (6) directs an air flow towards the braking member (4), **characterised in that** generally plate-shaped reception members (12) surrounding the friction means (6) are arranged to capture residues resulting from friction between the friction means (6) and the braking member (4),and **in that** said air flow passes through two cyclones (14, 16) arranged in series and located downstream from the braking member (4) relative to a flow direction of the air supplied by the line (8), the line (8) being directed so that an air flow leaving the line (8) carries away the residues captured by the reception members (12).

6. Method according to the preceding claim, wherein the air flow is directed within a predetermined delay after braking of the vehicle has taken place.
